# EUROPEAN PATENT SPECIFICATION

(11) **EP 4 249 553 B1**
(45) Date of publication and mention of the grant of the patent: **11.12.2024**
(21) Application number: 23000040.8
(22) Date of filing: 16.03.2023
(51) Int. Cl.: C08L 5/16, C08L 61/14, C14C 3/20, C14C 3/08, C14C 3/28, C14C 3/06, D06P 3/32, C08B 37/16, D06P 1/48, D06P 1/56, D06P 5/00

(54) **LEATHER OR RETANNING COMPOUND WITH CYCLODEXTRIN-BASED INCLUSION COMPOUND**
VERBINDUNG ZUM GERBEN ODER NACHGERBEN VON LEDER MIT EINER EINSCHLUSSVERBINDUNG AUF CYCLODEXTRINBASIS
COMPOSÉ POUR LE TANNAGE OU RETANNAGE DU CUIR AVEC UN COMPOSÉ D'INCLUSION À BASE DE CYCLODEXTRINE

(30) Priority: 24.03.2022 IT 202200000938
(43) Date of publication of application: 27.09.2023
(73) Proprietor: BI-QEM Pte Ltd., Singapore 049513 (SG)
(72) Inventor: BI-QEM SPECIALTIES S.p.A., 20123 Milano (IT); Gliubizzi, Rocco, 20123 Milano (IT); Pauciulo, Antonio, 20123 Milano (IT); Bruno, Immacolata, 20123 Milano (IT); Bartiromo, Andrea Roberta, 20123 Milano (IT); Quaratesi, Ilaria, 20123 Milano (IT); Gaeta, Carmine, 20123 Milano (IT)
(74) Representative: Nemni, Raffaello

(56) References cited:
- EP-B1- 3 625 372
- CN-A- 103 114 459
- CN-A- 113 201 605
- GB-A- 893 338

## Description

### Field of the Invention

The present invention refers to a cyclodextrin-based inclusion compound with at least one tanning agent The invention is set out in the appended set of claims.

The compound being the object of the present invention is useful as a tanning or retanning agent for animal skin (hereinafter "leather" for short), and has among other advantages a significantly improved environmental impact compared to known tanning or retanning agents.

The compound being the object of the present invention also gives the leather the special characteristics compared to known tanning agents due to the absence of metals in the tanned leather.

### State of the Art

The tanning industry is to be considered an industry with high environmental impact, as each individual phase of the processing of the hides involves the use of numerous chemical substances. This processing also requires frequent discharge of the processing baths, with consequent emissions of significant quantities of pollutants, both liquid and solid.

From an environmental point of view, the most problematic issue in the tanning sector involves the management of the process water, as a portion of the tanning agents used in the process are found in the tanning baths destined both for purification and for disposal, as illustrated in the document A.D. Convington, W.R Wise "Tanning Chemistry The Science of Leather", Royal Society of Chemistry, Croydon, 2020.

The greatest pollutant impact undoubtedly derives from the use of basic chromium sulphate or trivalent chromium salts. It should be noted that on average, 2/3 of the Cr(OH)SO₄ used in tannery are able to be fixed on the leather and about 1/3 of the remaining chromium is dispersed in the tannery waste water.

The possibility of oxidation of the Cr³+ to Cr⁶⁺ (notoriously carcinogenic), both during the tanning processes and in the finished products such as leather and hides should also be taken into consideration.

It is also worth noting the hazards deriving from the transportation and handling of hexavalent chromium, particularly sodium or potassium dichromate. Indeed these substances, essential raw materials for the synthesis of the aforementioned trivalent chromium salts used in tannery as outlined in the document A.W. Nugraha, O. Suparno, N.S. Indrasti, Hoerudin, "IOP Conf. Ser.: Earth Environment Science", 2029, 335, 012032, have been long included in the SVHC *Candidate List.*

The environmental impact due to aldehydes should also not be underestimated, particularly that of glutaraldehyde, which has itself recently been added to the SVHC *Candidate List*; these substances are sometimes used as an alternative to chromium salts.

The tanning industry has always had significant interest in research of sustainable compounds both in environmental and toxicological terms able to limit the environmental impact of the tanning supply chain.

For this reason, a growing number of companies in the tanning industry have recently adopted direct tanning with synthetic tanning agents also known as syntans. These chemicals allow to obtain metal-free leathers with chemical and physical characteristics almost similar to those obtained with traditional tanning methods based on the use of chromium salts, as illustrated in the document N. Nishad Fathima, T. Prem Kumar, "Wet white leather processing: a new combination tanning system" J. Am. Leather Chemistry Association, 2006,100, 57.

Analogous to chromium salts, syntans also do not have the ability to exhaust the tanning bath. This shortcoming results, in terms of environmental impact, into reduced contamination of the waste water compared to the old generation of tanning agents, however this reduced environmental impact is still not satisfactory. It must be noted that syntans are obtained from fossil fuels, and in almost all cases are poorly biodegradable, as illustrated in Italian patent application SA2008A000038.

Effective tanning of the leather is based on two important processes: (i) Good dispersion/sectional penetration of the tanning agent into the collagen matrix of the leather; (ii) Formation of strong and stable chemical interaction with the functional groups of the leather proteins.

It is generally recognised that uniform dispersion of the tanning agent is an essential prerequisite for a uniform tanning process. The tanning power of syntans depends mainly on both the availability of -OH groups to form hydrogen bonds with the collagen and on their diffusion through it.

The commercially available natural substances which feature numerous -OH groups and which have the potential to interact with collagen include cyclodextrins, as illustrated in the documents WO 2016/171745 and WO 2014/206043. CN 113 201 605 A discloses a multi-step chromium-free tanning process to obtain cow white wet leather which includes tanning with synthetic tanning agent, vegetable tanning, multi-metal tanning and the subsequent treatment with cyclodextrin aldehyde derivatives. EP 3 625 372 B discloses the pre-tanning, re-tanning or tanning of animal hides with a synthetic tanning agent being a condensation polymer of sulfonated phenol, urea and formaldehyde. GB 893 338 A discloses the preparation of a synthetic tanning agent being the condensation product of formaldehyde, dihydroxy diphenyl sulphone and sulphonated bisphenol A and its use in the tanning of animal hides.

Cyclodextrins are natural compounds which are synthesised from starch through an enzymatic reaction.

The breakdown of starch by various enzymes in the presence of water produces dextrins, which are oligosaccharides used in the food, textile and paper industries.

It has been observed that adding the enzyme glycosyltransferase to a cold solution of dextrins leads to the formation of a linear oligosaccharide which undergoes an intramolecular cyclisation reaction to form cyclodextrin. It follows that the technology used for industrial synthesis of cyclodextrin has proven both economically and environmentally sustainable, and significant quantities are already present on the market, allowing for widespread use, as illustrated in the document A. Vyas, S, Saraf, " J Inclusion Phenomena Macrocycl Chemistry", 2008, 62,23.

Cyclodextrins are therefore natural cyclic oligosaccharides, formed of monomeric units of D-glucopyranoside joined together by bonding α-1,4 glycosidic.

Based on the number of units of glucose contained in the ring, they are known as *α-* (6 units), *β*- (7 units) and *γ*- (8 units) - respectively, *α*-cyclodextrin, *β*-cyclodextrin, *γ*-cyclodextrin.

Cyclodextrins feature a truncated cone shape, defined as a toroid, whose outer surface is hydrophilic, while the internal cavity is hydrophobic. This latter part is able to incorporate - through secondary chemical interactions such as the hydrophobic effect and hydrogen bonding - organic molecules of various types, giving raising to supramolecular complexes.
The resulting complex has its own chemical/physical properties which differ from the host organic molecule which, in an aqueous environment, is released in a controlled manner over time and without losing its properties once released.

The affinity between cyclodextrin and the host molecule is regulated primarily by secondary interactions and by the dimensions of the host molecule, which must clearly be complementary with the dimensions of the host cavity.

The literature regarding the application of cyclodextrins to the tanning process is minimal, despite their enormous potential.

The use of cyclodextrins in the leather sector relates primarily to the colourant fixation phase or for the gradual release of fragrances by the leather, as described in the documents CN103114459 and CN101857908.

### Summary of the Invention

The present invention refers to a metal-free and environmentally friendly tanning or retanning compound which incorporates a cyclodextrin-based inclusion compound and at least one aromatic or non-aromatic synthetic tanning agent, as better illustrated hereinunder.

The compound which is the object of the present invention has proven to be surprisingly capable of forming strong and stable interactions with the leather during the direct tanning or retanning phase, including for leather previously tanned with chromium, implementing excellent chemical/physical properties of the leather such as T_{g} (shrinkage temperature), leather thickness, grain crack index, resistance to cracking, burst load, distension at burst, tensile strength and elongation at maximum force.

The compound which is the object of the present invention has also shown itself to be surprisingly effective in the leather dyeing phases, such as colour deposition and fixation.

The compound which is the object of the present invention has also shown itself to be surprisingly effective at masking malodours deriving from human perspiration of those wearing leather goods. The inventors were surprised to find that, through the complexation of the organic molecules responsible for the aforementioned malodour in the cyclodextrin cavities deliberately left free during preparation of the compound which is the object of the present invention, said malodour was no longer perceptible to the human sense of smell.

The use of the cited inclusion compounds also allows for optimal exhaustion of the tanning baths. The cyclodextrins indeed act as carriers, increasing the percentage of the syntans which penetrate the leather to be tanned through fixation and thus facilitating the consumption of all chemical products used during the tanning process, and thus considerably limiting the presence of chemical substances in the drains of the processing baths.

### Description of the Invention

The present invention refers to a tanning or retanning compound which incorporates an inclusion compound based on one of the cyclodextrins specified above and at least one synthetic tanning agent

The tanning or retanning compound which is the object of this invention involves various embodiments of the synthetic tanning agent.

In a first embodiment, the synthetic tanning agent is obtained through polycondensation reaction of formaldehyde and at least one sulphonated bisphenol monomer, preferably selected from a group composed of bisphenol A, bisphenol S, bisphenol F.

The present invention also includes a second embodiment in which the synthetic tanning agent is obtained through polycondensation reaction of formaldehyde, urea and at least one sulphonated bisphenol monomer, preferably selected from a group composed of bisphenol A, bisphenol S, bisphenol F.

The present invention also involves another embodiment in which the synthetic tanning agent is obtained through polycondensation reaction of formaldehyde and at least one sulphited bisphenol monomer, preferably selected from a group composed of bisphenol A, bisphenol S, bisphenol F.

Another embodiment of the present invention involves the synthetic tanning agent being obtained through polycondensation reaction of formaldehyde, urea and at least one sulphited bisphenol monomer, preferably selected from a group composed of bisphenol A, bisphenol S, bisphenol F.

The tanning agent which is the subject of this invention can also be obtained through polycondensation reaction of formaldehyde and at least one sulphonated aromatic hydrocarbon monomer, preferably selected from a group composed of naphthalene, hydroxynaphthalenes, aminohydroxynaphthalenes.

The tanning agent which is the subject of this invention can also be obtained through polycondensation reaction of formaldehyde and at least one sulphited aromatic hydrocarbon monomer, preferably selected from a group composed of naphthalene, hydroxynaphthalene, aminohydroxynaphthalene.

The tanning or retanning agent object of this invention has another embodiment in which the synthetic tanning agent is obtained through polycondensation reaction of formaldehyde and at least one sulphonated hydrocarbon monomer selected from a group composed of phenols, cresols, phenolsulphonic acid.

In a further embodiment of this invention, the synthetic tanning agent is obtained through polycondensation reaction of formaldehyde, urea and at least one sulphonated hydrocarbon monomer selected from a group composed of phenols, cresols, phenolsulphonic acid.

The synthetic tanning agent which is the object of this invention can also be obtained through polycondensation reaction of formaldehyde and at least one sulphited hydrocarbon monomer, selected from a group composed of phenols, cresols, phenolsulphonic acid.

The last embodiment of the present invention involves the synthetic tanning agent being obtained through polycondensation reaction of formaldehyde, urea and at least one sulphited hydrocarbon monomer, selected from a group composed of phenols, cresols, phenolsulphonic acid.

In order to better understand the scope of the present invention, the different procedures leading to the final attainment of a solid (white-beige, ivory or pinkish) or a paste composed of a compound which is the object of the present invention are specified below. They are:
- Co-precipitation procedure: the two components, a cyclodextrin and a tanning agent in a form of a solution, are added to an aqueous solution previously heated and stirred vigorously. Preferably the cyclodextrin has previously been solubilised in the aqueous solution at a temperature between 50°C and 95°C, preferably between 60°C and 70°C. The resulting inclusion complex is obtained by precipitation after cooling of the solution at ambient temperature or, preferably, between 4°C and -4°C. The precipitate containing the complex is recovered through known filtration methods and subsequently anydrified at a temperature <100°C under vacuum, for example at a pressure between 10 mmHg and 20 mmHg.
- Solution evaporation procedure: the two components, a cyclodextrin and a tanning agent in a form of aqueous solution, are mixed at ambient temperature and heated between 50°C and 60°C. A vacuum is then applied at a pressure of between 10 mmHg and 20 mmHg in order to drive away the water until an ivory-white solid is obtained. In order to encourage the evaporation of the solvent and prevent adhesion of the synthesised powder to the walls of the reaction environments, inert material and/or inorganic salts such as silica (functionalised or not), sodium sulphate, kaolin etc. can be added to the liquid product. These additives are not covered under this invention and do not change the chemical-physical characteristics of the finished compound.
- Procedure for obtaining a paste in the semi-solid phase: The two components, a cyclodextrin and a tanning agent in solid form, are mixed together in a mortar, at ambient temperature, with the addition of a quantity of water not exceeding 30% of the quantity of the cyclodextrin and the tanning agent (w/w), preferably between 20% and 25%. The paste is then anydrified under vacuum at a pressure of between 10 mmHg and 20 mmHg in order to obtain an ivory-white solid.
- Spray-drying of aqueous solutions: the two components, a cyclodextrin and a tanning agent in a form of aqueous solution, are mixed at ambient temperature with a formation of a non-homogeneous, fluid beige paste. The mass is then heated to around 90°C. The solution obtained is fed into a spray dryer in order to instantaneously evaporate the solvent to obtain a fine ivory-white powder. The nebulizer of the spray-dryer may be either turbine or nozzle type.
- Mechanical grinding procedure, for example by appropriate mill, mortar etc.: the two components, a cyclodextrin and a tanning agent in solid form are mixed or milled in an appropriate device.

The inclusion complex resulting from each of the procedures outlined above is soluble in water or in aqueous solutions of water-miscible solvents; the aqueous solutions of the inclusion complexes are also to be considered object of the present invention. The preparation procedures for the formulations outlined above are characterised by the formation of an inclusion complex in a cyclodextrin of the tanning or retanning agent. The preparation of the complex can be carried out without distinction in an acidic, neutral and alkaline environment; the complexes obtained are water soluble at pH values of between 1 and 12.

The invention is further described through the examples reported below carried out on experimental basis.

### EXPERIMENTAL PART

### (a) Preparation procedure of the compounds which are object of the present invention

### Example 1

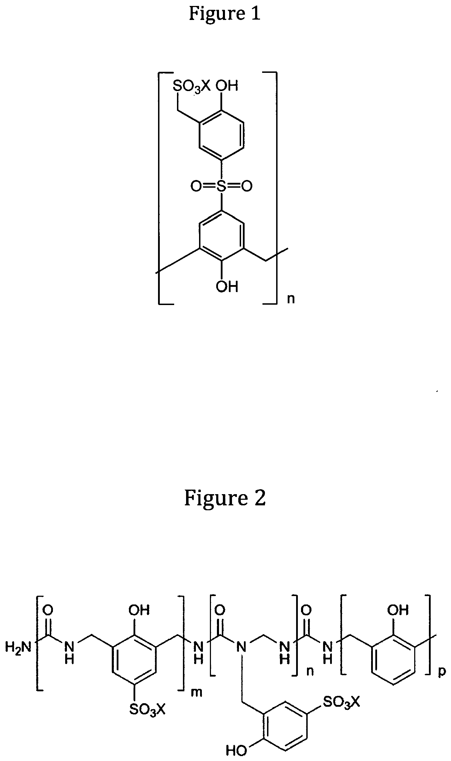

A solution of the tanning inclusion complex via co-precipitation procedure. A solution consisting of a Bisphenol S-based tanning agent (commercial name: CHEMIPLUS 2DS BASICO liq. 42%. Manufacturer: BI-QEM Specialties S.P.A.), the structure of which is schematically represented in figure 1 (0.029 moles, 1 equivalent, 94.86 g), and water (220 g) is introduced into a two-necked flask with refrigerant and inerted with nitrogen. This solution is gradually heated up to 85°C. Under vigorous stirring a solid cyclodextrin (0.057 moles, 1.93 equivalent, 64.66 g) is gradually introduced. The heterogeneous solution obtained is left under stirring for about 20 minutes, until the cyclodextrin is completely dissolved, obtaining a clear solution. Finally, the reaction mass is brought to 75°C before adding Na₂SO₄ (17.45 g) and a mixture of dicarboxilic acids C4-C6 (18.37 g) to correct the pH to the desired value (between 3.0 and 5.0). The reaction mass is left further under stirring for 1 hour.

At the end of the process, the solvent, preferably water, is evaporated in vacuum to obtain an ivory-white solid which, characterised by ¹H-NMR in DzO, is an inclusion complex of the tanning agent in cyclodextrin. The inclusion complex thus obtained is stable in the solid phase for at least 12 months at a temperature of 20°C -25°C.

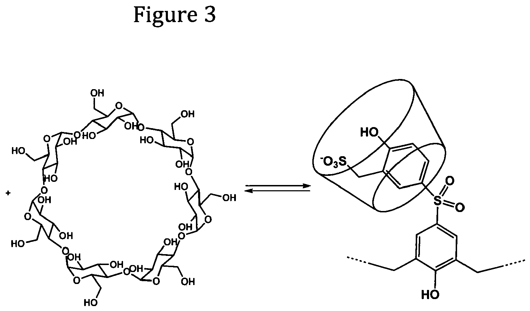

The tanning or retanning compound thus obtained is shown in figure 3.

### Example 2

Preparation of the retanning inclusion complex via co-precipitation procedure. A solution consisting of a phenol-based retanning agent (commercial name: CHEMIPLUS LW 125 liq., Manufacturer: BI-QEM Specialties S.P.A.), the structure of which is schematically represented in figure 2 (0.131 moles, 2.3 equivalent, 91.34 g), and water (100 g) is introduced into a two necked flask with refrigerant and rendered inerted with nitrogen. This solution is gradually heated up to 75°C. Under vigorous stirring a solid cyclodextrin (0.057 moles, 1 equivalent, 64.66 g) is gradually introduced. The heterogeneous solution obtained is left under stirring for 15 minutes, until the cyclodextrin is completely dissolved, obtaining a clear solution. Keeping the temperature stable at 75°C, tetrasodium EDTA (0.85 g) and Na₂SO₄ (19.46 g) are added to the reaction environment. The reaction mass is left under stirring for a further 15 minutes.

A second solution composed of NaOH (7.47 g) and H₂O (22.5 g) is slowly added to the reaction environment at a temperature of 60°C to correct the pH to the required value (between 3.0 and 4.5).

The solvent, preferably water, is finally evaporated in vacuum to obtain an ivory-white solid which, characterised by ¹H-NMR in DzO, is an inclusion complex of the retanning agent in cyclodextrin. The inclusion complex thus obtained is stable in the solid phase for at least 12 months at a temperature of 20°C -25°C.

### Example 3

Preparation of the retanning inclusion complex via solvent evaporation procedure.

A basic solution of water (200g) and NaOH (2g) is prepared in a one-neck flask. A cyclodextrin (0.057 mol, 1.93 equivalent, 64.66 g) and a phenol-based retanning agent (commercial name: CHEMIPLUS LW 125 liq., Manufacturer: BI-QEM Specialties S.P.A.) (0.057 moles, 1 equivalent, 39.71 g) are introduced at ambient temperature in solution at pH of 8. The compounds are mixed with the aid of a magnetic stirrer until a paste is obtained.

EDTA (0.85 g), Na₂SO₄ (19.46 g) and citric acid (22.49 g) are added to this paste. The paste is mixed for an additional 1 hour until a homogeneous compound is obtained. The pH of the final solution will be between 3.0 and 5.0.

The compound obtained is dried under vacuum until an ivory-white solid is obtained. ¹H-NMR spectroscopy of the solid has confirmed the formation of an inclusion complex. The inclusion complex is stable in the solid phase for at least 12 months at a temperature of 20°C -25°C.

### Example 4

Preparation of an inclusion complex through mixing procedure in basic pH solution.

A cyclodextrin (0.057 moles, 1 equivalent, 64.66 g) and a solution consisting of a Bisphenol S-based tanning agent (commercial name: CHEMIPLUS 2DS BASICO liq. 42%. Manufacturer: BI-QEM Specialties S.P.A.), (0.057 moles, 1 equivalent, 186.45 g) and H₂O (258 ml) are mixed in a mortar at ambient temperature until a homogeneous paste is obtained.

The paste is then dried under vacuum until an ivory-white solid is obtained. ¹H-NMR spectroscopy of the solid has confirmed the formation of an inclusion complex. The inclusion complex is stable in the solid phase for at least 12 months at 25°C.

### Example 5

Preparation of an inclusion complex via the mixing procedure in an acidic solution.

A cyclodextrin (0.057 moles, 3 equivalent, 64.66 g) and a solution consisting of a Bisphenol S-based tanning agent (commercial name: CHEMIPLUS 2DS BASICO liq. 42%. Manufacturer: BI-QEM Specialties S.P.A.), (0.019 moles, 1 equivalent, 62.15 g) are mixed in a mortar at ambient temperature for 10 minutes until a non-homogeneous beige paste is obtained. The pH is corrected with sulphuric acid 20% w/w and the mass is heated to a temperature of around 90°C until a clear, homogeneous brown solution is obtained. The liquid is transferred onto suitable ceramic plates in a ventilated oven in order to allow the solvent, preferably water, to gradually evaporate until a brown powder is obtained. The temperature of the oven can be set indiscriminately from 100 ≤ T(°C) ≤ 250 without causing any changes to the chemical nature of the complex obtained. ¹H-NMR spectroscopy of the solid has confirmed the formation of an inclusion complex.

The inclusion complex is stable in the solid phase for at least 12 months at a temperature of 20°C -25°C.

### Example 6

### Preparation of the inclusion complex using a spray dryer.

A cyclodextrin (0.057 mol, 3 equivalent, 64.66 g) and a phenol-based retanning agent (commercial name: CHEMIPLUS LW 125 liq., Manufacturer: BI-QEM Specialties S.P.A.) (0.019 moles, 1 equivalent, 13.24 g) are mixed in a beaker at ambient temperature. The components are stirred at ambient temperature for 10 minutes using a magnetic stirrer: a non-homogeneous beige paste is formed. The mass is heated to a temperature of around 90°C until a homogeneous clear brown solution is obtained. The solution obtained is used to feed a pilot spray dryer plant in order to instantly evaporate the solvent, preferably water, and obtain a fine ivory-white powder. The temperature of the air with nitrogen entering and leaving the spray dryer chamber and the transport unit, specially a screw conveyor, can be set without distinction 95≤ T(°C) ≤ 280 without causing any change to the chemical nature of the complex obtained. ¹H-NMR spectroscopy of the solid has confirmed the formation of an inclusion complex. The inclusion complex is stable in the solid phase for at least 12 months at a temperature of 20°C -25°C.

### Example 7

Preparation of an inclusion complex via grinding procedure with a mill.

A cyclodextrin (0.057 moles, 3.7 equivalent, 64.66 g) and a Bisphenol S-based tanning agent (commercial name: CHEMIPLUS 2DS BASICO liq. 42%. Manufacturer: BI-QEM Specialties S.P.A.) (0.015 moles, 1 equivalent, 50.39 g), previously anydrified in order to obtain a powder, are loaded together into a suitable mill and milled at ambient temperature. The mechanical milling is stopped when the instrumental investigations confirm the formation of the complex, around 10 minutes, and can be performed without any contraindications even at higher temperatures. The final pH of the complex obtained will be between 4.0 and 5.0.

¹H-NMR spectroscopy of the solid has confirmed the formation of an inclusion complex. The inclusion complex is stable in the solid phase for at least 12 months at a temperature of 20°C -25°C. (b) Tanning and retanning of leathers with the compound which is the subject of the present invention.

### Example 8

The inclusion complex synthesised as per the recipe in Example 1 was used for direct metal-free tanning on pickled calf leathers. The leather is placed in the drum, the synthesised inclusion complex with a proportion of 40% w/w compared to the leather weight, water and additional additives required for the tanning process. The pH of the tanning bath is between 2.5 and 5.0.

The dried leather was subjected to repeated physical tests founding the following average values:
T_{g} (Shrinkage temperature, EN ISO 3380:2015) = 75°C
Leather thickness (EN ISO 2589:2016) = 1.0 mm
Resistance to cracking (EN ISO 3378:2005) = 49.2 kg (482 N)
Grain crack index (EN ISO 3378:2005) = 8.6 mm
Load at burst (EN ISO 3379:2015) = 65.1 kg (638 N)
Distension at burst (EN ISO 3379:2015) = 9.8 mm
Tensile strength (ISO 3376:2020) = 32.9 N/mm²
Elongation at break (EN ISO 3376:2020) = 39.3 %

A parallel tanning test, performed using the same procedure but completely replacing the synthesised inclusion complex with just the Bisphenol S tanning agent, always using 40% w/w of product compared to the leather weight, provides physical test results that are worse than the above, confirming the synergistic effect of the carried performed by the cyclodextrin.

Finally, part of the tanned leather underwent dyeing, highlighting a significant improvement in terms of uniformity of the tones achieved compared to the parallel test; this confirms the excellent dispersant/penetrant activity performed with great success by the cyclodextrin contained in the inclusion complex.

### Example 9

The inclusion complex synthesised as per the recipe in Example 2 was used during retanning of leather previously chrome tanned, specifically basic sulphate of chromium. The tanned leather is placed into the drum, the synthesised inclusion complex with a proportion of 30% w/w of product with respect to the weight of the leather, water and additional additives required for the retanning process. The pH of the tanning bath is between 3.0 and 5.5.

The dried leather was subject to repeated physical tests founding the following average values:
T_{g} (Shrinkage temperature, EN ISO 3380:2015) = 75°C
Leather thickness (EN ISO 2589:2016) = 1.5 mm
Resistance to cracking (EN ISO 3378:2005) = 24.8 kg (243 N)
Grain crack index (EN ISO 3378:2005) = 7.2 mm
Load at burst (EN ISO 3379:2015) = 44.4 kg (435 N)
Distension at burst (EN ISO 3379:2015) = 10.0 mm
Tensile strength (ISO 3376:2020) = 13.2 N/mm²
Elongation at break (EN ISO 3376:2020) = 34.3 %

A parallel tanning test, performed using the same procedure but completely replacing the synthesised inclusion complex with just the phenol-based tanning agent, always using 30% w/w of product compared to the leather, provides physical test results that are worse than the above, above all in terms of thickness, specifically the fullness and feel of the lower layers of the leather, confirming in this case too the synergistic carrier effect performed by the cyclodextrin. Finally, part of the tanned leather underwent dyeing, once again highlighting a significant improvement in terms of uniformity of the tones achieved compared to the parallel test, specifically the dispersant/penetrant activity performed by the cyclodextrin contained in the inclusion complex.

## Claims

1. Tanning or retanning compound **characterized by** comprising an inclusion compound based on a cyclodextrin and at least one synthetic tanning agent

2. Tanning or retanning compound according to claim 1 **characterized in that** the synthetic tanning agent is obtained by a polycondensation reaction of formaldehyde and at least one bisphenol sulphonate monomer preferably selected from a group consisting of bisphenol A, bisphenol S, bisphenol F.

3. Tanning or retanning compound according to claim 1 **characterized in that** the synthetic tanning agent is obtained by polycondensation reaction of formaldehyde, urea and at least one monomer of bisphenol sulphonate preferably selected from a group consisting of bisphenol A, bisphenol S, bisphenol F.

4. Tanning or retanning compound according to claim 1 **characterized in that** the synthetic tanning agent is obtained by polycondensation reaction of formaldehyde and at least one monomer of bisphenol sulphited preferably selected from a group consisting of bisphenol A, bisphenol S, bisphenol F.

5. Tanning or retanning compound according to claim 1 **characterized in that** the synthetic tanning agent is obtained by polycondensation reaction of formaldehyde, urea and at least one monomer of sulphated bisphenol preferably selected from a group consisting of bisphenol A, bisphenol S, bisphenol F.

6. Tanning or retanning compound according to claim 1 **characterized in that** the synthetic tanning agent is obtained by reaction of polycondensation of formaldehyde and at least one monomer of a sulfonated aromatic hydrocarbon preferably selected from a group consisting of naphthalene, hydroxynaphthalenes, aminohydroxynaphthalenes.

7. Tanning or retanning compound according to claim 1 **characterized in that** the synthetic tanning agent is obtained by a polycondensation reaction of formaldehyde and at least one monomer of a sulphated aromatic hydrocarbon preferably selected from a group consisting of naphthalene, hydroxynaphthalene, aminohydroxynaphthalene.

8. Tanning or retanning compound according to claim 1 **characterized in that** the synthetic tanning agent is obtained by polycondensation reaction of formaldehyde and at least one monomer of a sulfonated hydrocarbon selected from a group consisting of phenols, cresols, phenolsulfonic acid.

9. Tanning or retanning compound according to claim 1 **characterized in that** the synthetic tanning agent is obtained by polycondensation reaction of formaldehyde, urea and at least one monomer of sulphonate hydrocarbon selected from a group consisting of phenols, cresols, phenolsulfonic acid.

10. Tanning or retanning compound according to claim 1 **characterized in that** the synthetic tanning agent is obtained by polycondensation reaction of formaldehyde and at least one monomer of sulphited hydrocarbon selected from a group consisting of phenols, cresols, phenolsulfonic acid.

11. Tanning or retanning compound according to claim 1 **characterized in that** the synthetic tanning agent is obtained by polycondensation reaction of formaldehyde, urea and at least one monomer of sulphited hydrocarbon selected from a group consisting of phenols, cresols, phenolsulfonic acid.

## Patentansprüche

1. Gerbstoff oder Nachgerbstoff, **dadurch gekennzeichnet, dass** er eine Einschlussverbindung auf der Basis eines Cyclodextrins und mindestens einen synthetischen Gerbstoff enthält.

2. Gerbstoff oder Nachgerbstoff nach Anspruch 1, **dadurch gekennzeichnet, dass** der synthetische Gerbstoff durch eine Polykondensationsreaktion von Formaldehyd und mindestens einem Monomer von Bisphenol-Sulfonat, vorzugsweise ausgewählt aus einer Gruppe, die aus Bisphenol A, Bisphenol S, Bisphenol F besteht, erhalten wird.

3. Gerbstoff oder Nachgerbstoff nach Anspruch 1, **dadurch gekennzeichnet, dass** der synthetische Gerbstoff durch Polykondensationsreaktion von Formaldehyd, Harnstoff und mindestens einem Monomer von Bisphenol-Sulfonat, vorzugsweise ausgewählt aus einer Gruppe, die aus Bisphenol A, Bisphenol S, Bisphenol F besteht, erhalten wird.

4. Gerbstoff oder Nachgerbstoff nach Anspruch 1, **dadurch gekennzeichnet, dass** der synthetische Gerbstoff durch Polykondensationsreaktion von Formaldehyd und mindestens einem Monomer von sulfitiertem Bisphenol, vorzugsweise ausgewählt aus einer Gruppe, die aus Bisphenol A, Bisphenol S, Bisphenol F besteht, erhalten wird.

5. Gerbstoff oder Nachgerbstoff nach Anspruch 1, **dadurch gekennzeichnet, dass** der synthetische Gerbstoff durch eine Polykondensationsreaktion von Formaldehyd, Harnstoff und mindestens einem Monomer von sulfatiertem Bisphenol, vorzugsweise ausgewählt aus einer Gruppe, die aus Bisphenol A, Bisphenol S, Bisphenol F besteht, erhalten wird.

6. Gerbstoff oder Nachgerbstoff nach Anspruch 1, **dadurch gekennzeichnet, dass** der synthetische Gerbstoff durch eine Polykondensationsreaktion von Formaldehyd und mindestens einem Monomer eines sulfonierten aromatischen Kohlenwasserstoffs, vorzugsweise ausgewählt aus einer Gruppe, die aus Naphthalin, Hydroxynaphthalinen und Aminohydroxynaphthalinen besteht, erhalten wird.

7. Gerbstoff oder Nachgerbstoff nach Anspruch 1, **dadurch gekennzeichnet, dass** der synthetische Gerbstoff durch eine Polykondensationsreaktion von Formaldehyd und mindestens einem Monomer eines sulfatierten aromatischen Kohlenwasserstoffs, vorzugsweise ausgewählt aus einer Gruppe, die aus Naphthalin, Hydroxynaphthalin, Aminohydroxynaphthalin besteht, erhalten wird.

8. Gerbstoff oder Nachgerbstoff nach Anspruch 1, **dadurch gekennzeichnet, dass** der synthetische Gerbstoff durch Polykondensationsreaktion von Formaldehyd und mindestens einem Monomer eines sulfonierten Kohlenwasserstoffs, ausgewählt aus einer Gruppe, die aus Phenolen, Kresolen, Phenolsulfonsäure besteht, erhalten wird.

9. Gerbstoff oder Nachgerbstoff nach Anspruch 1, **dadurch gekennzeichnet, dass** der synthetische Gerbstoff durch eine Polykondensationsreaktion von Formaldehyd, Harnstoff und mindestens einem Monomer von Kohlenwasserstoff-Sulfonat, ausgewählt aus einer Gruppe, die aus Phenolen, Kresolen, Phenolsulfonsäure besteht, erhalten wird.

10. Gerbstoff oder Nachgerbstoff nach Anspruch 1, **dadurch gekennzeichnet, dass** der synthetische Gerbstoff durch eine Polykondensationsreaktion von Formaldehyd und mindestens einem Monomer eines sulfitierten Kohlenwasserstoffs, ausgewählt aus einer Gruppe, die aus Phenolen, Kresolen, Phenolsulfonsäure besteht, erhalten wird.

11. Gerbstoff oder Nachgerbstoff nach Anspruch 1, **dadurch gekennzeichnet, dass** der synthetische Gerbstoff durch eine Polykondensationsreaktion von Formaldehyd, Harnstoff und mindestens einem Monomer eines sulfitierten Kohlenwasserstoffs, ausgewählt aus einer Gruppe, die aus Phenolen, Kresolen, Phenolsulfonsäure besteht, erhalten wird.

## Revendications

1. Un composé de tannage ou de retannage **caractérisé par le fait qu'**il comprend un composé d'inclusion à base de cyclodextrine et au moins un agent de tannage synthétique.

2. Le composé de tannage ou de retannage de la revendication 1, **caractérisé par le fait que** l'agent de tannage synthétique est obtenu par le biais d'une réaction de polycondensation du formaldéhyde et d'au moins un monomère de bisphénol sulfonate issu de préférence d'un groupe constitué de bisphénol A, de bisphénol S et de bisphénol F.

3. Le composé de tannage ou de retannage de la revendication 1, **caractérisé par le fait que** l'agent de tannage synthétique est obtenu par le biais d'une réaction de polycondensation du formaldéhyde, de l'urée et d'au moins un monomère de bisphénol sulfonate issu de préférence d'un groupe constitué de bisphénol A, de bisphénol S et de bisphénol F.

4. Le composé de tannage ou de retannage de la revendication 1, **caractérisé par le fait que** l'agent de tannage synthétique est obtenu par le biais d'une réaction de polycondensation du formaldéhyde et d'au moins un monomère de bisphénol sulfité issu de préférence d'un groupe constitué de bisphénol A, de bisphénol S et de bisphénol F.

5. Le composé de tannage ou de retannage de la revendication 1, **caractérisé par le fait que** l'agent de tannage synthétique est obtenu par le biais d'une réaction de polycondensation du formaldéhyde, de l'urée et d'au moins un monomère de bisphénol sulfaté issu de préférence d'un groupe constitué de bisphénol A, de bisphénol S et de bisphénol F.

6. Le composé de tannage ou de retannage de la revendication 1, **caractérisé par le fait que** l'agent de tannage synthétique est obtenu par le biais d'une réaction de polycondensation du formaldéhyde et d'au moins un monomère d'hydrocarbure aromatique sulfoné issu de préférence d'un groupe constitué de naphtalène, d'hydroxynaphtalène et d'aminohydroxynaphtalène.

7. Le composé de tannage ou de retannage de la revendication 1, **caractérisé par le fait que** l'agent de tannage synthétique est obtenu par le biais d'une réaction de polycondensation du formaldéhyde et d'au moins un monomère d'hydrocarbure aromatique sulfaté issu de préférence d'un groupe constitué de naphtalène, d'hydroxynaphtalène et d'aminohydroxynaphtalène.

8. Le composé de tannage ou de retannage de la revendication 1, **caractérisé par le fait que** l'agent de tannage synthétique est obtenu par le biais d'une réaction de polycondensation du formaldéhyde et d'au moins un monomère d'hydrocarbure sulfoné issu d'un groupe constitué de phénols, de crésols et d'acide phénolsulfonique.

9. Le composé de tannage ou de retannage de la revendication 1, **caractérisé par le fait que** l'agent de tannage synthétique est obtenu par le biais d'une réaction de polycondensation du formaldéhyde, de l'urée et d'au moins un monomère d'hydrocarbure sulfonate issu d'un groupe constitué de phénols, de crésols et d'acide phénolsulfonique.

10. Le composé de tannage ou de retannage de la revendication 1, **caractérisé par le fait que** l'agent de tannage synthétique est obtenu par le biais d'une réaction de polycondensation du formaldéhyde et d'au moins un monomère d'hydrocarbure sulfité issu d'un groupe constitué de phénols, de crésols et d'acide phénolsulfonique.

11. Le composé de tannage ou de retannage de la revendication 1, **caractérisé par le fait que** l'agent de tannage synthétique est obtenu par le biais d'une réaction de polycondensation du formaldéhyde, de l'urée et d'au moins un monomère d'hydrocarbure sulfité issu d'un groupe constitué de phénols, de crésols et d'acide phénolsulfonique.
